Europäisches Patentamt

(19) European Patent Office

Office européen des brevets

(11) EP 0 926 887 A2

(12) EUROPEAN PATENT APPLICATION

(43) Date of publication:
30.06.1999 Bulletin 1999/26

(51) Int. Cl.⁶: H04N 5/20

(21) Application number: 98310050.4

(22) Date of filing: 08.12.1998

(84) Designated Contracting States:
AT BE CH CY DE DK ES FI FR GB GR IE IT LI LU MC NL PT SE
Designated Extension States:
AL LT LV MK RO SI

(30) Priority: 22.12.1997 US 68421 P
30.04.1998 US 83583 P

(71) Applicant:
TEXAS INSTRUMENTS INC.
Dallas, Texas 75243 (US)

(72) Inventors:
• Renner, Karl H
Dallas, Texas 75231 (US)
• Chang, Weider P
Hurst, Texas 76054 (US)
• Apparajan, Ganesan
Austin, Texas 78719 (US)

(74) Representative:
Harris, Ian Richard et al
D. Young & Co.,
21 New Fetter Lane
London EC4A 1DA (GB)

(54) **Automatic gain and offset control of a video decoder analog front end**

(57) A digital control technique for automatically obtaining lock on an analog video signal, and identifying the sync tip and back porch levels, by adjusting gain and offset. Pixel samples for each scan line are obtained from the output of an analog-to-digital converter (112) and fed back to a microprocessor (120) running a control program which provides digital control of gain and offset. After gain and offset are adjusted to obtain lock, a fine adjustment mode is entered during which gain and offset are adjusted to obtain the desired sync tip height and back porch levels.

Figure 1

## Description

### Background and Summary of the Invention

The present invention relates to the control of analog front ends to video decoders.

### Composite Video

The satisfactory reproduction of a picture requires the transmission of several types of information combined into a single waveform called a composite video signal. The signal is composed of video information and synchronizing information. Composite video describes a signal in which luminance, chrominance, and synchronization information are multiplexed in the frequency, time, and amplitude domain for a single-wire distribution. The luminance is defined as, the component signal in color video systems that represents the brightness of the image. Chrominance is defined as the component signal in color video systems that describe color-difference information.

The video signal conveys information concerning the blanking level, the black reference level, average scene brightness level, picture details, and color values. The video signal is unipolar with one direct current ("DC") level (nominally 0 volts) representing black, and a second level (nominally +700 mV) representing white. Any level between 0 and 700 mV represents a degree of gray.

The synchronizing information consists of horizontal and vertical scanning synchronization, and chrominance decoder synchronization. The horizontal and vertical synchronization ("sync") information is used to trigger the horizontal and vertical deflection circuits in the receiver. The horizontal sync tells the display where to put the video signal in the left-right dimension, and the vertical sync tells the display where to put the signal in the top-bottom dimension. It consists of pulses having a specific amplitude, duration, and shape best suited to the task at hand. The synchronizing pulses are unipolar, with a reference level of 0 V and a peak negative level of nominally -300 mV.

The video signal waveform, with a nominal peak-to-peak amplitude of 700 mV, and the synchronizing signal waveform, with a nominal peak-to-peak amplitude of 300 mV, are added together to form a composite video signal of 1 V peak-to-peak. The synchronizing pulses are placed in parts of the composite signal that do not contain active picture information. These parts are blanked (forced below a black level) to render invisible the retrace of scanning beams on a correctly adjusted display.

These standard video signal levels apply to both conventional television scanning standards - National Television System Committee ("NTSC") and Phase Alternating Line ("PAL"). The U.S standard is NTSC which uses 525 lines at 60 Hz, while PAL is predominant in Europe and uses 625 lines at 50 Hz. Composite video signals are expressed in IRE units. An IRE unit is defined as one-hundredth of the excursion from the blanking level (0 IRE units) to the reference white level (100 IRE units). A standard 1 V peak-to-peak signal is said to have an amplitude of 140 IRE units of which 100 IRE units are luminance, and 40 IRE units are synchronization information. Further discussion of video circuits and signals can be found in the following texts: M. Robin, DIGITAL TELEVISION FUNDAMENTALS, McGraw-Hill (1998); K. Jack, VIDEO DEMYSTIFIED 2nd Edition, Harris Semiconductor (1996); and A. Inglis, VIDEO ENGINEERING, 2nd Edition, McGraw-Hill (1996), all of which are hereby incorporated by reference.

### Synchronizing Signals

Television signals carry information necessary for synchronizing the scanning of displays with the scanning that took place in the original video camera imager. This is done by adding synchronization pulses ("sync pulses") to the horizontal and vertical blanking intervals. In order that the sync pulses do not interfere with the purpose of the blanking intervals, the pulses are designed to represent the greatest signal excursion in the black direction ("blacker than black"). This allows the sync pulses to be easily separated from the rest of the video signal during a process called sync separation. Because the video content of the signal is constantly changing and could interfere with synchronization if it got into the sync circuits of a display or receiver, several features are added to facilitate clean sync separation.

In the realm of horizontal synchronization, a "front porch" is added on the horizontal blanking interval. The front porch is a small inflection between the start of horizontal blanking and the beginning of the horizontal sync pulse. This makes sure that a variation in the picture content at the right-hand edge of the picture cannot smear over into the edge of the sync pulse and disturb the synchronization timing. The front porch provides a small barrier region to prevent an interruption in horizontal synchronization by a variation in video content.

A similar problem may occur with vertical synchronization, except that the problem is caused by interlacing. In principle, vertical synchronization could be accomplished by providing a sync pulse with a front porch in the vertical interval, just as in the horizontal interval. The vertical pulse could be made wide enough that it could be easily separated from the horizontal pulses. However, the wide vertical pulse would represent an interruption of horizontal synchronization. This gives rise to features of the vertical signal called vertical serrations and equalization pulses. Serrations are narrow slits (or narrow negative going pulses) placed in the vertical pulse at horizontal sync times, during the vertical pulse, to maintain horizontal sync. This way horizontal sync continues through the vertical interval. To ensure that vertical sync of the odd and even fields is nearly matched, serration and equalization pulses are at twice the horizontal frequency.

## Video Decoders

When decoding composite video signals, the input analog video signal is DC restored to ground during the horizontal sync time, setting the "sync tip" (i.e. the most negative part of the sync pulse) to a zero value. Automatic gain control ("AGC") is used to keep the output signal of the circuit constant as the input video signal amplitude varies.

An internal voltage bias is not required if the composite video is not converted to a differential signal. The differential mode of operation has the advantage of rejection of common-mode signals such as power supply noise and other interferences.

## Analog Video Signal Distribution

Analog distribution equipment usually has a signal headroom adequate to accept video signal levels greater than 1 V peak-to-peak in amplitude. However, the amplitude of the composite video input signal may vary over a range from an attenuation of -9 dB to a gain of +3 dB. To avoid exceeding the headroom limitation, the camera controls are adjusted continuously by the operator to limit the signal-level excursions to the specified upper and lower limits. Specialized video oscilloscopes are used to monitor the signal and are labor-intensive. Digital processing equipment, using analog input-output ports, requires special care because of the limited amount of headroom of the analog-to-digital ("A2D") converters.

Particular and preferred aspects of the invention are set out in the accompanying independent and dependent claims. Features of the dependent claims may be combined with those of the independent claims as appropriate and in combinations other than those explicitly set out in the claims.

An embodiment of the invention enables the provision of a digital control technique for automatically obtaining lock on an analog video signal, and identifying the sync tip and "back porch" levels, by adjusting gain and offset. After obtaining lock, the video input signal needs to be amplified such that its peak-to-peak amplitude is set to a nominal 1-volt level, and its back porch is set to another desired level (e.g. 0.25 volt) so that phase lock of the pixel (sampling) clock to the horizontal sync pulse, color lock, correct brightness, contrast, and color levels may be achieved. In the past, this function has been performed by analog circuitry. After power-up or change of input channels, a start-up mode is entered in which the gain and offset are coarsely adjusted to simply find the horizontal sync edge and achieve lock. When coarse lock is achieved, a fine adjustment mode is entered during which the gain and offset are adjusted to achieve a desired sync tip height and back porch level. If there is a momentary loss of lock, then a do-nothing state is entered during which no adjustments are made and the fine clamp is turned off. If the no-lock condition persists long enough, then a frozen state is entered during which no adjustments are made and coarse clamp is turned on. If the no-lock condition persists too long, then the start-up mode is reentered and the reacquisition of lock is initiated. If lock is reacquired during the do-nothing or frozen states, then a transition is made back to fine adjust.

An advantage is that the technique provides a microprocessor-controlled technique of automatic gain and offset adjustment of the analog front end. Another advantage is that the technique provides a way to control various modes of operation for gain, offset, and clamp control for both composite and S-video. Another advantage is that the program detects convergence of gain and offset to stable values, and freezes the automatic adjustment based upon the convergence criteria. Unfreeze of the adjustment is based on an adaptive threshold which varies according to the input amplitude level, noise, and chip characteristic. Another advantage is that the innovative technique provides a variable shift constant which is applied to the delta values, and which affects the time constant of the control algorithms. (For normal input signal conditions, the time constant is set to a low value which results in a fast response to changing conditions. For weak and noisy input signal conditions, the time constant is set to a higher value which results in a slower response.)

## Brief Description of the Drawings

Exemplary embodiments of the invention are described hereinafter, by way of example only, with reference to the accompanying drawings, in which:

Figure 1 shows an analog front end according to an embodiment of the invention.
Figure 2 shows the analog front end state diagram for the embodiment of Figure 1.
Figure 3 shows the gain control method.

**Figure 4** shows the offset control method.

**Figure 5** shows a flowchart of the method used during the start-up state for each line of video.

**Figure 6** illustrates the fine adjustments which are made outside the vertical sync interval.

**Figure 7** illustrates a flowchart of the gain control processing which includes gain convergence detection and freeze AGC mechanisms.

**Figure 8** illustrates a flowchart for offset control processing which includes offset convergence detection and freeze offset adjustment mechanisms.

## Detailed Description of the Particular Embodiments

The numerous innovative teachings of the present application will be described with particular reference to the presently preferred embodiment. However, it should be understood that this class of embodiments provides only a few examples of the many advantageous uses of the innovative teachings herein. In general, statements made in the specification of the present application do not necessarily delimit <u>any</u> of the various claimed inventions. Moreover, some statements may apply to some inventive features but not to others.

## Automatically Controlled Analog Front End

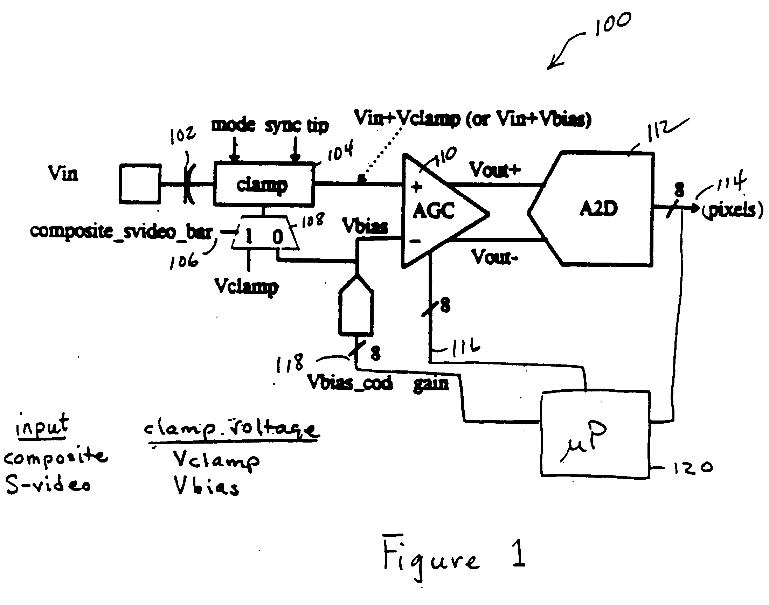

A block diagram of the analog front end is shown in **Figure 1.** The video input **Vin** to the analog circuit **100** is capacitively coupled through a capacitor **102** into the circuit. The sync tip of the video signal is clamped (using a clamping circuit **104**) to a reference voltage which is selected based upon the multiplexer **108** select control input **106** (composite_svideo_bar). If the video signal is composite video, the clamping voltage used is **Vclamp.** When the input video signal is S-video, the clamping voltage is **Vbias.**

The clamping function consists of a coarse mode and a fine mode. The coarse mode is utilized when lock to the horizontal sync pulse has not been achieved, and the horizontal sync pulse location is unknown. Coarse mode detects and clamps the most negative portion of the video input signal (which is the tip of the horizontal sync pulse - "sync tip"). In coarse mode, a + 1 or -1 is added to the signal gain to adjust the signal amplitude so that the most negative portion of the signal may be detected. Fine clamp is utilized when lock to the horizontal sync has been achieved. Pulses which are centered on the sync tip enable fine clamp to the reference voltage. During the vertical sync interval, fine clamp is disabled, since the equalization pulses that occur before and after vertical sync are one-half the width of the normal horizontal sync pulses. Therefore, the fine-clamp pulse width would have to be cut approximately in half, which would degrade its action. Coarse clamp is slower in its action than fine clamp (which is fast and more precise).

The AGC block **110** amplifies or attenuates the input such that the sync tip height is set to a desired voltage (such as 40/140 IRE = 0.286 volt), and its peak-to-peak amplitude is 1 volt (when peak white is present in the active video). The voltage offset of the AGC **110** output is then adjusted such that the back porch is set to a desired voltage level (such as 0.286 volt). The signal is then fed to an A2D **112** which outputs pixels **114** to subsequent digital signal processing logic. For each scan line, a pixel sample from the sync tip and the back porch are obtained by the logic based upon timing signals from a pixel counter. A microprocessor **120** reads and processes these samples, and generates digital codes which are automatically applied to the gain (G) **116** and offset (Vbias) **118** inputs of the analog front end. The AGC 110 is a differential amplifier whose output consists of negative- and positive-going signals biased at a common-mode DC level (Vcm).

$$Vout+ = G^*(Vin + Vclamp - Vbias) + Vcm$$

$$Vout- = G^*(Vin + Vclamp - Vbias) + Vcm$$

The differential output of the AGC 110 is fed to the input of the A2D 112.

$$Vdif = Vout+ - Vout-$$

$$Vdif = 2^*G^*(Vin + Vclamp - Vbias)$$

The gain G and voltage bias Vbias are adjusted to produce an AGC differential output which swings between +1 volt and -1 volt. The A2D output may be written as a function of the differential input.

$$A2D\ output = round\ [255^*(Vdif + 1)/2]$$

The video input signal Vin consists of an AC signal (Vac) biased at a DC voltage Vdc.

$$Vin = Vac + Vdc$$

Vbias is adjusted to cancel Vdc and Vclamp in the AGC output.

$$Vbias = Vdc + Vclamp$$

This results in a differential output which contains only the AC signal.

$$Vdif = 2*G*Vac$$

The software algorithm serves to adjust gain and Vbias to achieve the desired sync tip height and back porch levels at the A2D output. Typical values are 64 for sync tip height and 64 for back porch. The following example illustrates a solution of gain and Vbias for a video input whose peak amplitude is 1 volt.

$$\text{sync tip: } Vin = 0 \text{ volt}$$

$$A2D \text{ output} = 0$$

$$Vdif = 1.0 = 2*G*(0 + Vclamp - Vbias)$$

$$\text{back porch: } Vin = 0.286 \text{ volt}$$

$$A2D \text{ output} = 64$$

$$Vdif = -0.5 = 2*G*(0.286 + Vclamp - Vbias)$$

Simultaneous solution of the above equations yields the following results

$$gain = 1/(4*0.286) = 0.874$$

$$Vbias = 1/(2*gain) + Vclamp = 0.572 \text{ volt} + Vclamp$$

### S-Video

S-video is another type of video output from high quality systems such as camcorders and satellite systems. S-video consists of two separate channels which are luma and chroma. Luma contains horizontal and vertical syncs, and black and white information, while chroma contains the color burst and active video color. For S-video, the video decoder (of Figure 1) has two identical analog front ends, both of which must be used for S-video inputs. The digital control composite_svideo_bar input 106 is set to 1 for the luma channel (selecting Vclamp as the clamp voltage). The control signal is set to 0 for the chroma channel (selecting Vbias as the clamp voltage). The luma channel operates in the same manner as with composite video. The same gain is applied to both channels and the offset is applied to the luma channel. Fine clamping mode is used only on the chroma channel, which clamps it during the sync tip interval. Vbias is set to the mid-range value with a fixed 0x80.

During the fine mode of adjustment, the gain and offset algorithms run in parallel and converge to a solution (given a stable input signal). The solution may fall at a point halfway between two adjacent values for the gain and offset outputs. This may result in an oscillation condition between the two values and produce visible effects in the video picture. A convergence condition is monitored in the algorithm by summing the delta values over two frames (525 lines for NTSC, and 625 lines for PAL). If the sum falls below a threshold value, then the accumulator is frozen and its value is set at the halfway point. For example, if one LSB error is desired, the threshold value would be set to 2*525=1050. Another mechanism is employed to unfreeze the accumulator. If the delta value exceeds a threshold for m consecutive lines, then the accumulator is unfrozen. The two mechanisms enable a slow response time to the good news of convergence, and a fast response time to the bad news of instability.

The Applicant discloses another control technique in a copending European Patent application entitled Automatic AGC Bias Voltage Calibration in a Video Decoder filed contemporaneously herewith and claiming priority from US applications 60/068,420, 60/077,389 and 09/139,038 (TI reference 24419; DYC reference P005856EP). A copy of that copending European application is to be found on the public part of the EPO file of the present application, and the content thereof is incorporated herein by reference.

## General State Diagram

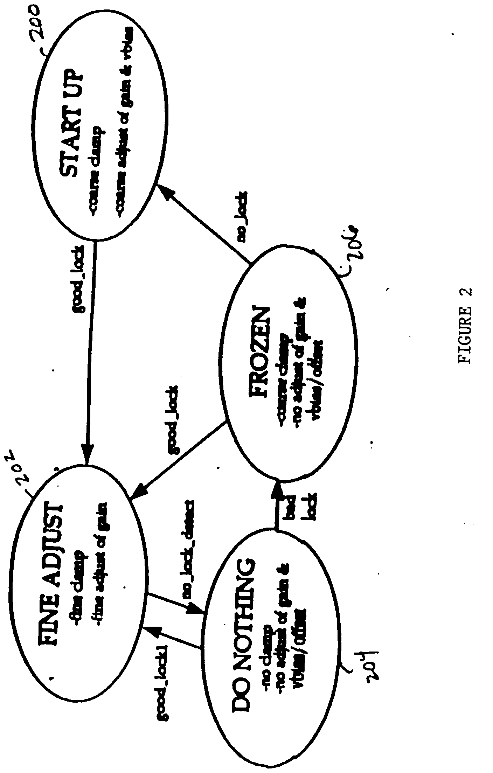

Software which runs in the microprocessor controls the clamp mode, gain, and offset applied to the analog front end. **Figure 2** illustrates the state diagram for controlling the analog front end. After power-up or change of input channels, a start-up mode (**State 200**) is entered in which the gain and offset (Vbias) are coarsely adjusted to simply find the horizontal sync edge and achieve lock. When coarse lock is achieved, a fine adjustment mode (**State 202**) is entered during which the gain and offset are adjusted to achieve a desired sync tip height and back porch level. The transition from coarse to fine lock occurs when at least 10 consecutive lines of lock (good_lock) have been obtained. If there is a momentary loss of lock (at least 1 line of no lock - no_lock_detect), then a do-nothing state (**State 204**) is entered during which no adjustments are made and the fine clamp is turned off. If the no-lock condition persists long enough (at least 20 consecutive lines of no lock - bad_lock), then a frozen state (**State 206**) is entered during which no adjustments are made and coarse clamp is turned on. If the no-lock condition persists too long (at least 200 lines of no lock within a frame - no_lock), then the start-up mode (State 200) is reentered and the reacquisition of lock is initiated. If lock is reacquired during the do-nothing (State 204) (for at least 2 consecutive lines of lock - good_lock1), transition is back to the fine adjust state (State 202). If lock is reacquired during the frozen state (State 206) (for at least 10 consecutive lines of lock - good_lock), then a transition is made back to fine adjust (State 202).

## Automatic Gain Control

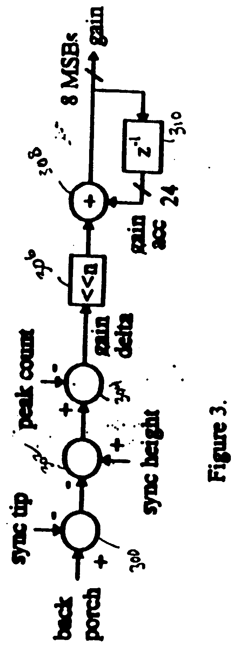

During the fine adjust state, the gain is adjusted to set the sync height to a desired level. **Figure 3** illustrates the method for automatic gain control. Pixel samples from the back porch and sync tip are subtracted (**Node 300**) to determine the actual sync height. The difference between the desired sync height and the actual sync height is computed (**Node 302**). For each line, a peak counter counts the number of times the A2D output pixel reaches its maximum limit of 255 or overflows. This peak count is subtracted from the sync height difference (**Node 304**) such that the gain is decreased and A2D overflow is eliminated. The gain delta ($\Delta_g$) is then left-shifted by n bits (where n is an integer) (**Block 306**), and the result summed (**Node 308**) into a 24-bit accumulator (**Block 310**). The shift constant n may be varied (which affects the time constant of the automatic gain control). If a weak or noisy input signal condition is detected, then n may be set to 0, resulting in a large time constant. If a normal input signal is detected, then n (which is a constant in the diagram) is set to a positive value (e.g. 4) which results in a smaller time constant.

## Automatic Offset Control

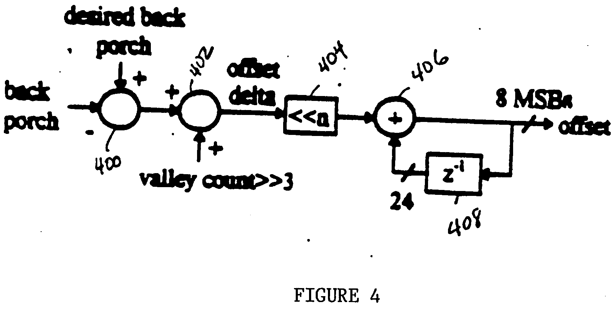

The method for automatic offset control is shown in **Figure 4.** The pixel sample from the back porch is subtracted (**Node 400**) from the desired back porch pixel level to generate a difference. For each line, a peak counter counts the number of times the A2D output pixel reaches its minimum limit of 0 or underflows. The valley count is added (**Node 402**) to the difference to generate an offset delta ($\Delta_o$) which is then left shifted by n bits (< <n) (**Block 404**), and summed (**Node 406**) into a 24-bit accumulator **408**. The 8 MSBs of the accumulator are written to the front end. The accumulator value converges to a value which should drive the back porch pixel value to the desired back porch level, and eliminate any underflow condition.

## State Diagram Detailed Flowcharts

The following figures illustrate detailed flowcharts for the different states in the overall state diagram. The processing between the start and end points in the flowcharts is performed each time the software program is executed on a line-by-line basis. The symbol delta ($\Delta$) with the appropriate subscript (gain and offset, or g and o) is used to represent delta gain and offset values, respectively.

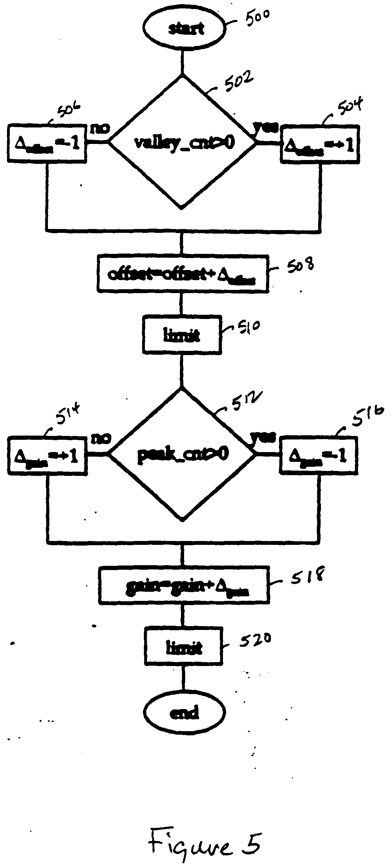

**Figure 5** illustrates the method utilized during the start-up state for each line of video. Here, gain and offset are incremented or decremented based upon the peak and valley counter values. After start-up, the valley count is checked. If the valley count > 0 (**Block 502**), the $\Delta_{offset}$ is incremented by 1 (**Block 504**). If the valley count is less than 0, the $\Delta_{offset}$ is decremented by 1 (**Block 506**). The offset is then adjusted according to the $\Delta_{offset}$ value (**Block 508**). The limit block **510** serves to limit the range to eight bits (which falls between 0 and 255). Next, the peak count is checked (**Block 512**). If the peak count > 0 (**Block 512**), the $\Delta_{gain}$ is decremented by 1 (**Block 516**). If the peak count is < 0, the $\Delta_{gain}$ is incremented by 1 (**Block 514**). The gain is then adjusted according to the $\Delta_{gain}$ value (**Block 518**). Again, the limit (**Block 520**) serves to limit the range to eight bits.

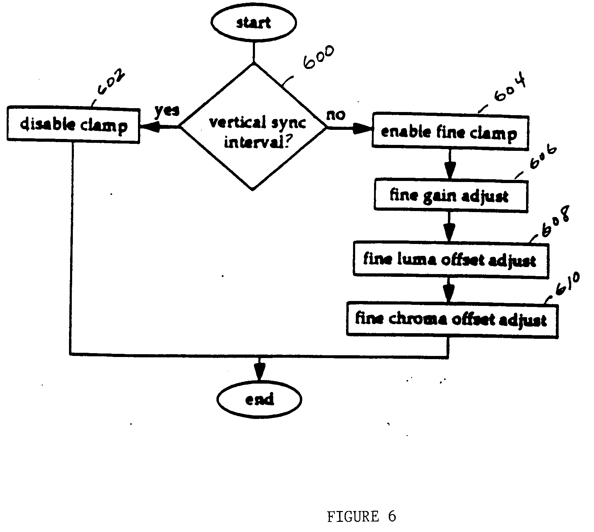

**Figure 6** illustrates the fine adjustments made outside the vertical sync interval. The vertical sync interval includes serration and equalization pulses, which occur at twice the horizontal sync frequency. (Serration is defined as the interval between the end of a broad pulse and the start of the following sync pulse. The term refers to the absence of a pulse rather than the presence of one. Equalization is the correction of undesired frequency or phase response through the use of an equalizer.) The equalizing pulses are approximately half the normal horizontal sync pulse width, while the serration pulses are also approximately half the normal width (but are positive going pulses). Therefore, since the sync tip and back porch fall in different locations during the vertical sync interval, fine clamp and fine adjustment are disabled during the vertical sync interval.

Fine adjustment of gain and offset is performed once per line. When gain and offset values have converged to stable values, the automatic adjustment is frozen so as to prevent oscillations between two adjacent codes which can produce horizontal streaking in the picture. Convergence is based upon the comparison of the sum of the gain/offset codes of an existing frame with the previous frame. When the input amplitude varies, then the adjustment is unfrozen so as to maintain a constant level at the output of the decoder. The unfreezing of the automatic adjustment is based upon comparison of the delta error sum recorded after the first frame, with the delta error sum of successive frames. If they differ by more than a threshold for consecutive frames, then the adjustment is unfrozen. The recorded value represents a threshold which adapts to the input level, noise, and the chip's gain/offset characteristic. If a vertical sync interval occurs (**Block 600**), there is no picture content to be displayed, so clamping is disabled (**Block 602**). However, if a non-vertical sync interval occurs, the fine clamp mode is enabled (**Block 604**) to lock in the signal. Then the gain is adjusted (**Block 606**). Next, the monochrome (luma) offset is adjusted (**Block 608**). Finally, the color component (chroma) offset is adjusted (**Block 610**).

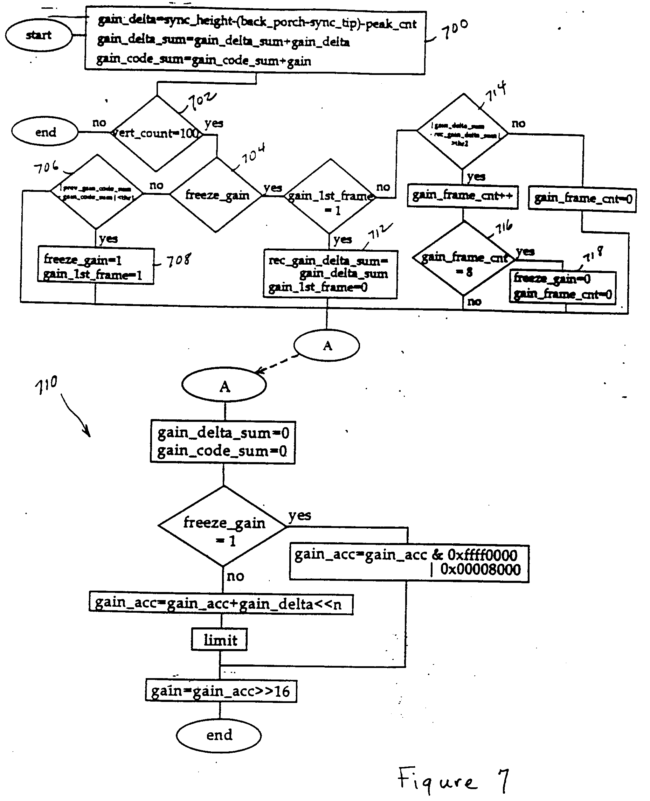

**Figure 7** illustrates the gain control processing which includes gain convergence detection and freeze AGC mechanisms. The gain convergence is checked once per frame when the vertical count is equal to 100. It is based on the comparison of the current frame sum of gain codes with the previous frame sum. If the absolute value of the difference between the frame sums is less than 250, then convergence has occurred, the freeze_gain variable is set to one, and the gain accumulator is set to a value half way between two integer values for gain. After being frozen, the gain delta sum corresponding to the first frame is recorded as rec_gain_delta_sum. If the gain_delta_sum differs from the recorded sum by more than 50 for 8 consecutive frames, then the AGC is unfrozen by resetting freeze_gain to 0.

The program begins by setting initial conditions (**Block 700**): the parameters gain_delta, gain_delta_sum, and gain_code_sum are defined. When the vertical count reaches 100 (**Block 702**), a boolean determination is then made whether to freeze the gain (**Block 704**). If false, the difference in the existing frame sum of gain codes is compared with the previous frame sum. If the absolute value does not exceed a first threshold value (thr1, which is set to 250) (**Block 706**), then convergence has occurred. Thus, the freeze_gain variable is set to one, and the gain accumulator is set to half-way between two integer values for gain (**Flowchart Section 710**). If the gain is frozen (Block 704), the gain delta sum corresponding to the first frame is recorded as rec_gain_delta_sum (**Block 712**). If the gain_delta_sum differs from the recorded sum by more than 50 (**Block 714**) for 8 consecutive frames (**Block 716**), then the AGC is unfrozen by resetting freeze_gain to 0 (**Block 718**).

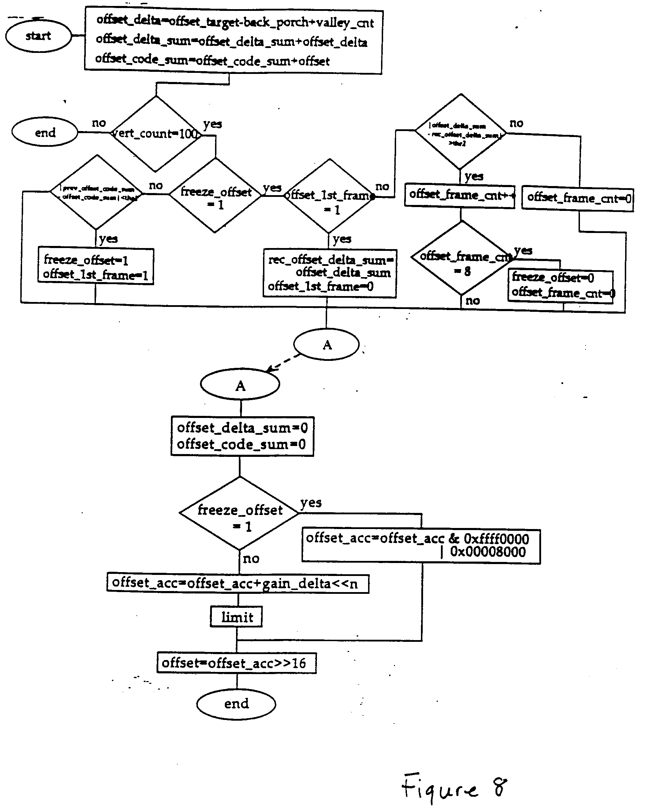

**Figure 8** illustrates the offset control processing which includes offset convergence detection and freeze offset adjustment mechanisms, and the discussion follows closely to that of Figure 7. The offset convergence is checked once per frame when the vertical count is equal to 100. It is based on the comparison of the current frame sum of offset codes with the previous frame sum. If the absolute value of the difference between the frame sums is less than 250 then convergence has occurred, the freeze_offset variable is set to one, and the offset accumulator is set to a value half way between two integer values for offset. After being frozen, the offset delta sum corresponding to the first frame is recorded as rec_offset_delta_sum. If the offset_delta_sum differs from the recorded sum by more than 50 for 8 consecutive frames, then the automatic adjustment is unfrozen by resetting freeze_offset to 0.

The circuits described above find application in apparatus requiring video decoding for processing and/or distributing video signals, including, for example, receivers and digital processing equipment.

There has been disclosed a digitally controlled analog video decoder circuit, comprising: a control circuit for sampling a digital signal, said digital signal derived from an analog video signal input to said analog video decoder circuit, said control circuit adjusting gain and offset of said analog video signal to obtain voltage levels, when an input to said analog video circuit changes.

There has further been disclosed a digitally-controlled video decoder analog front-end circuit, comprising: an input for receiving an analog video signal; a locking circuit for locking onto said video signal; an amplifying circuit for amplifying said video signal; wherein said amplifying circuit receives gain and offset parameters for adjusting said video signal; a digitizing circuit for providing a digital signal of said video signal; and a control circuit for controlling said analog front-end circuit; wherein for each analog signal, selected parameters are sampled from said digital signal and processed by said control circuit to adjust said gain and offset.

There has also been disclosed a method for digitally-controlling an analog video decoder circuit, comprising the step of: sampling a digital signal with a control circuit, said digital signal derived from an analog video signal input to said analog video decoder circuit, said control circuit adjusting gain and offset of said analog video signal to obtain voltage levels, when an input to said analog video circuit changes.

There has further been disclosed a method for controlling gain and offset in a video decoder analog front-end circuit, comprising the steps of: (a.) receiving an analog video signal at an input; (b.) providing offset and gain adjustment to said analog video signal; (c.) digitizing said analog video signal to provide a digital signal; (d) for each scan line, sampling said digital signal to obtain selected parameters; and (e.) processing said parameters to adjust said gain and offset.

## Modifications and Variations

As will be recognized by those skilled in the art, the innovative concepts described in the present application can be modified and varied over a tremendous range of applications, and accordingly the scope of the invention is not limited by any of the specific exemplary teachings given.

It should also be noted that the disclosed innovative ideas are not limited only to NTSC circuits, but can be applied also to PAL, SECAM, or other circuits.

It should also be noted that the disclosed innovative ideas are not limited only to composite video circuits, but also to component video circuits.

## Claims

1.  A digitally controlled analog video decoder circuit, comprising a control circuit for sampling a digital signal derived from an analog video signal input to said analog video decoder circuit, said control circuit being operable to adjust gain and offset of said analog video signal to obtain desired voltage levels when an input to said analog video circuit changes.

2.  A circuit according to Claim 1, wherein said analog video signal comprises either composite video or S-video signals.

3.  A circuit according to Claim 1 or Claim 2, further comprising an automatic gain control circuit controllable by said gain and offset.

4.  A circuit according to any preceding claim, further comprising a clamping circuit operating in a coarse mode and a fine mode for clamping the most negative portion of said analog video signal to a reference voltage.

5.  A circuit according to any preceding claim, wherein said analog video decoder circuit comprises two analog front-end circuits for accommodating an S-video analog signal.

6.  A circuit according to any preceding claim, wherein said control circuit receives samples of said digital signal, and adjusts said gain and offset values of an amplifying circuit of said analog video decoder circuit.

7.  A circuit according to any preceding claim, wherein afier said analog video decoder power-up or after a change of said analog video signal, a start-up mode is entered wherein said control circuit adjusts said gain and offset to find a horizontal sync pulse edge of said analog video signal, to achieve lock.

8.  A circuit according to any preceding claim, wherein a fine adjust mode is entered after a coarse adjust mode, in which said gain and offset of said analog video signal are adjusted by said control circuit to achieve a certain sync tip height and back porch level of said analog video signal.

9.  A circuit according to any preceding claim, wherein said control circuit enters a do-nothing state when there is momentary loss of lock to said analog video signal.

10. A circuit according to any preceding claim, wherein if a no-lock condition exists long enough, then a frozen state is entered where said control circuit makes no adjustment to said amplifying circuit and a coarse clamp routine is entered.

11. A digitally controlled video decoder analog front-end circuit, comprising:

    an input for receiving an analog video signal;
    a locking circuit for locking onto said video signal;
    an amplifying circuit for amplifying said video signal; wherein
    said amplifying circuit receives gain and offset parameters for adjusting said video signal;
    a digitizing circuit for providing a digital signal of said video signal; and

a control circuit for controlling said analog front-end circuit; wherein

for each analog signal, selected parameters are sampled from said digital signal and processed by said control circuit to adjust said gain and offset.

**12.** Apparatus comprising a circuit according to any one of Claims 1 to 11.

**13.** A method for digitally-controlling an analog video decoder circuit, comprising the steps of:

sampling a digital signal with a control circuit, said digital signal being derived from an analog video signal input to said analog video decoder circuit and said control circuit adjusting gain and offset of said analog video signal to obtain desired voltage levels when an input to said analog video circuit changes.

**14.** A method for controlling gain and offset in a video decoder analog front-end circuit, comprising the steps of:

(a) receiving an analog video signal at an input;
(b) providing offset and gain adjustment to said analog video signal;
(c) digitizing said analog video signal to provide a digital signal;
(d) for each scan line, sampling said digital signal to obtain selected parameters; and
(e) processing said parameters to adjust said gain and offset.

Figure 1

START UP
-coarse clamp
-coarse adjust of gain & vtime

FROZEN
-coarse clamp
-no adjust of gain &
vtime/offset

FINE ADJUST
-fine clamp
-fine adjust of gain

DO NOTHING
-no clamp
-no adjust of gain &
vtime/offset

good_lock

no_lock

good_lock

no_lock_clamp

bad_lock

good_lock1

FIGURE 2

Figure 3.

FIGURE 4

Figure 5

start

600

602

604

606

608

610

disable clamp ← yes — vertical sync interval? — no → enable fine clamp

fine gain adjust

fine luma offset adjust

fine chroma offset adjust

end

FIGURE 6

Figure 7

start

offset_delta=offset_target-back_porch+valley_cnt
offset_delta_sum=offset_delta_sum+offset_delta
offset_code_sum=offset_code_sum+offset

end

no — vert_count=100 — yes

|offset_delta_sum - rec_offset_delta_sum| >thr2 — no

|prev_offset_code_sum - offset_code_sum|<thr1 — no — freeze_offset =1 — yes — offset_1st_frame =1 — no — offset_frame_cnt++

offset_frame_cnt=0

yes

freeze_offset=1
offset_1st_frame=1

rec_offset_delta_sum=
offset_delta_sum
offset_1st_frame=0

offset_frame_cnt =8 — yes

no

freeze_offset=0
offset_frame_cnt=0

A

A

offset_delta_sum=0
offset_code_sum=0

freeze_offset =1 — yes

offset_acc=offset_acc & 0xffff0000 | 0x00008000

no

offset_acc=offset_acc+gain_delta<<n

limit

offset=offset_acc>>16

end

Figure 8

17